# EUROPEAN PATENT APPLICATION

(11) **EP 4 507 091 A1**
(43) Date of publication of application: **12.02.2025**
(21) Application number: 22936644.8
(22) Date of filing: 09.11.2022
(51) Int. Cl.: H01M 50/24, H01M 10/659, H01M 50/209, H01M 50/211, H01M 10/647

(54) **BATTERY MODULE**

(30) Priority: 07.04.2022 KR 20220043356
(71) Applicant: Samsung SDI Co., Ltd., Yongin-si, Gyeonggi-do 17084 (KR)
(72) Inventor: LEE, Hyun Soo, Yongin-si, Gyeonggi-do 17084 (KR)
(74) Representative: Gulde & Partner
(86) International application number: PCT/KR2022/017569
(87) International publication number: WO 2023/195591

(57) **Abstract**

A battery module according to an embodiment of the present invention may include: a plurality of battery cells; and a heat-absorbing member which includes a plurality of foaming portions having a foam layer that generates foaming gas at a preset ignition temperature, a protective layer surrounding the foam layer, and a plate-shaped flame-retardant sheet provided outside the foaming portions, and disposed between the plurality of cells, wherein the battery cells and the heat-absorbing member are accommodated in the battery module. According to an embodiment of the present invention, by placing insulating parts with a foam layer whose volume expands depending on temperature between cells, it is possible to delay and block the spread of heat and flame to surrounding cells even if one cell ignites.

## Description

### TECHNICAL FIELD

An embodiment of the present invention relates to a battery module that can prevent the spread of heat or flame to surrounding cells when a cell ignites.

### BACKGROUND ART

Electric vehicles contain dozens to thousands of battery cells. Generally, multiple cells are accommodated inside one frame to be protected from external shocks such as heat and vibration, and are referred to as battery modules. Additionally, a battery management system and cooling device, which manage temperature, voltage, etc., may be added to multiple battery modules, and this is referred to as a battery pack.

Since multiple cells are accommodated in one frame, heat and flame may spread to adjacent cells when one cell ignites, causing the entire battery module to ignite.

The above information disclosed in this Background section is only for enhancement of understanding of the background of the invention and therefore it may contain information that does not constitute prior art.

### DESCRIPTION OF EMBODIMENTS

### TECHNICAL PROBLEM

An embodiment of the present invention provides a battery module that can prevent the spread of heat or flame to surrounding cells when a cell ignites.

### SOLUTION TO PROBLEM

A battery module according to an embodiment of the present invention may include: a plurality of battery cells; and a heat-absorbing member which includes a plurality of foaming portions having a foam layer that generates foaming gas at a preset ignition temperature, a protective layer surrounding the foam layer, and a plate-shaped flame-retardant sheet provided outside the foaming portions, and disposed between the plurality of cells, wherein the battery cells and the heat-absorbing member are accommodated in the battery module.

The foaming portion may be bubble-shaped.

The flame-retardant sheets may be provided in a pair.

The plurality of foaming portions may be arranged in a plate shape between the flame-retardant sheets.

The flame-retardant sheet may be made of MICA material.

The protective layer may be a thermoplastic resin.

The protective layer may include acrylic resin.

The foam layer may be butane or pentane.

The battery cell may have a cap assembly provided with a terminal, a lower surface that is the opposite side of the cap assembly, a long side surface connecting the lower surface, and a short side surface connecting the lower surface and the long side surface, and the heat-absorbing member may be arranged to face the long side surface.

### ADVANTAGEOUS EFFECTS OF DISCLOSURE

According to an embodiment of the present invention, by placing insulating parts with a foam layer whose volume expands depending on temperature between cells, it is possible to delay and block the spread of heat and flame to surrounding cells even if one cell ignites.

### BRIEF DESCRIPTION OF DRAWINGS

FIG. 1 is a perspective view showing the appearance of a battery module according to an embodiment of the present invention.
FIG. 2A is a perspective view showing battery cells and a heat-absorbing member according to FIG. 1.
FIG. 2B is a schematic diagram conceptually showing foaming portions within the heat-absorbing member according to FIG. 2A.
FIG. 3 is a schematic diagram showing a side surface in a state in which the heat-absorbing member according to FIG. 1 is installed.
FIG. 4 is a schematic diagram showing a state before the operation of the heat-absorbing member when the battery cell according to FIG. 3 ignites.
FIGS. 5A to 5C are schematic diagrams showing the operation process of the heat-absorbing member when the battery cell ignites.

### BEST MODE

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a battery module according to an embodiment of the present invention will be described in detail with reference to the attached drawings.

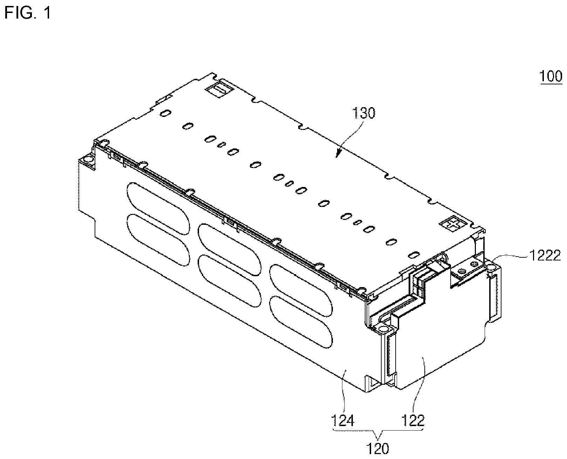

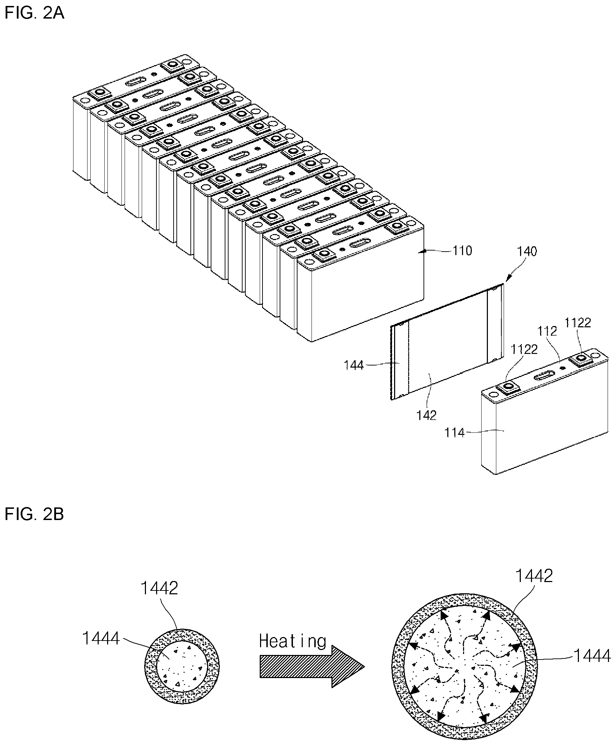

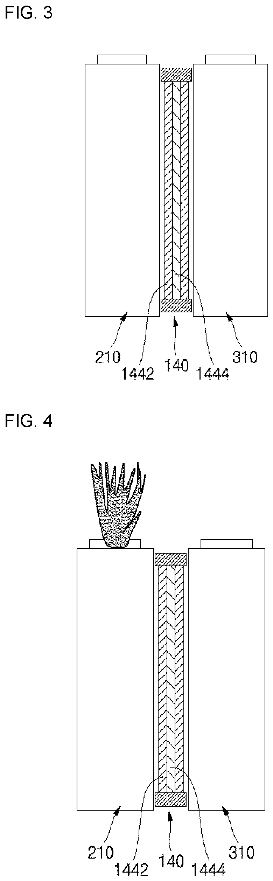

FIG. 1 is a perspective view showing the appearance of a battery module according to an embodiment of the present invention. FIG. 2A is a perspective view showing battery cells and a heat-absorbing member according to FIG. 1. FIG. 2B is a schematic diagram conceptually showing foaming portions within the heat-absorbing member according to FIG. 2A. FIG. 3 is a schematic diagram showing a side surface in a state in which the heat-absorbing member according to FIG. 1 is installed.

As shown in FIGS. 1 and 2A, the battery module 100 according to an embodiment of the present invention includes a plurality of battery cells 110, a module frame 120 for accommodating the battery cells 110, and a module cover 130 that covers the frame 120. A heat-absorbing member 140 may be inserted between the respective battery cells 110.

As shown in FIG. 2A, the plurality of battery cells 110 may be arranged in a row. As an example, the battery cells 110 may be configured such that a cap assembly 112 having positive and negative electrode terminals 1122 in a state in which an electrode assembly is inserted into a cell case is coupled to an upper portion of the cell case 114. The cell case 114 may have a lower surface that is opposite to the cap assembly, a long side surface with a relatively large area, and a short side surface with a relatively small area. The plurality of battery cells 110 may be arranged so that adjacent long sides face each other. As an example, the cell case of the battery cells 110 may be square, pouch, etc. The plurality of battery cells 110 may be connected in series and/or parallel by a bus bar to form the battery module 100. The battery module 100 may include a plurality of battery modules to form a battery pack. As an example, a bus bar may be electrically connected to a terminal provided in the battery cell 110, and the bus bar may be covered and protected by the module cover 130. The battery pack can be electrically connected to an electric vehicle or charger.

As shown in FIG. 1, the module frame 120 may include a pair of end plates 122 and a pair of side plates 124. The module frame 120 may be additionally provided with a floor frame (not shown), as necessary.

The pair of end plates 122 may be provided to be in close contact with the long side surfaces of the first and last cells among the battery cells 110 arranged in a row, respectively. As an example, the end plates 122 may provide a module mounting interface through a mounting bush 1222.

The pair of side plates 124 may be provided to be in close contact with a single side surface of the battery cells 110 arranged in a row. As an example, the side plates 124 may be connected to the end plates 122 to maintain the rigidity of the module frame 120 and protect the side surface of the battery module 100.

As described above, the module frame 120 may be provided to constrain the perimeter of the battery cells 110 arranged in a row, so that the battery module 100 does not interfere with various pack interfaces even if the battery cells 110 swell. In addition, the module frame 120 can protect the battery cells 110 from damage by reducing vibration or shock transmitted to the battery cells 110. In some examples, the module frame 120 may include or be referred to as a rigid body, a retainer, a housing, or a case.

The module cover 130 is placed on the upper side of the cap assembly 112 after the end plates 122 and the side plates 124 are coupled around the battery cells 110 and the bus bar is connected to the terminals 1122 of the battery cells 110. As an example, the module cover 130 may be coupled to the upper end of the side plates 124. Accordingly, the battery cells 110, the terminals 1122, the bus bar, etc. can be protected by the module cover 130. Additionally, as an example, the module cover 130 may be made of a plastic material.

Meanwhile, as shown in FIGS. 2A to 3, the heat-absorbing member 140 may be interposed between the plurality of battery cells 110, respectively. The heat-absorbing member 140 may include a flame-retardant sheet 142 and foaming portions 1442 and 1444 disposed inside the flame-retardant sheet 142.

As shown in FIG. 2A, the flame-retardant sheet 142 may be, for example, a pair of sheets made of MICA material in a rectangular shape. The flame-retardant sheet 142 may be arranged to face the long side surface of the battery cell 110. Therefore, the flame-retardant sheet 142 may be shaped and sized to correspond to the long side surface of the battery cell 110. As an example, a plurality of bubble-shaped foaming portions 1442 and 1444 are placed on one flame-retardant sheet 142 to have a plate shape, and then another flame-retardant sheet (142) is attached to make the foaming portions 1442 and 1444 maintain the plate shape. As an example, the flame-retardant sheet 142 may be attached to the long side surface of the battery cell 110 by an adhesive tape 144.

The foaming portions 1442 and 1444 include a plurality of bubbles, and, as shown in FIG. 2B, each bubble may include a protective layer 1442 disposed inside the flame-retardant sheet 142, and a foam layer 1444 filled inside the protective layer 1442.

The protective layer 1442 is a layer of thermoplastic resin material that becomes flexible when heat is applied, and may be made of, for example, acrylic resin. The protective layer 1442 may have a packed form that completely surrounds the foam layer 1444. As an example, as shown in FIG. 2B, the protective layer 1442 may be circular before foaming the foam layer 1444, and may be expanded and enlarged after foaming the foam layer 1444. Alternatively, the protective layer 1442 may be circular with a predetermined size and then expand and expand after foaming the foam layer 1444. In some examples, the overall diameter (size) of foaming portions 1442 and 1444 before expansion may be in the range of 10 to 16 µm, and after expansion, the overall diameter of foaming portions 1442 and 1444 may be in the range of 90 to 144 µm.

The foam layer 1444 is formed inside the protective layer 1442 and is filled with a material that foams with heat to form gas. The foam layer 1444 may be provided to form a foaming gas at a preset ignition temperature. The ignition temperature can be determined based on the temperature measured during general cell ignition. As an example, the foam layer 1444 may be filled with pentane or butane. The foam layer 1444 foams due to heat when the battery cell 110 ignites and generates gas, and as the gas is generated, the volume of the foam layer 1444 increases, expanding the protective layer 1442, as shown in FIG. 2B. That is, since the foam layer 1444 serves to absorb surrounding heat, the transfer of heat from the ignited battery cell 110 to the adjacent battery cell 110 can be minimized. Therefore, the ignition timing of the adjacent battery cell 110 can be delayed.

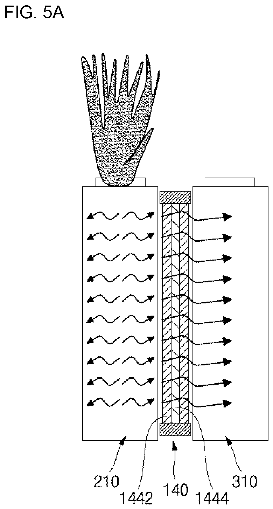

Hereinafter, the process by which the heat-absorbing member functions during ignition of a battery cell will be described (The foaming portions are arranged in a plate shape with a large number of bubble-shaped particles gathered together, but FIGS. 5A to 5C conceptually illustrate the operation of the foaming portion, and thus, for convenience, the foam layer and the protective layer are shown as separate layers).

FIG. 4 is a schematic diagram showing a state before the operation of the heat-absorbing member when the battery cell according to FIG. 3 ignites. FIGS. 5A to 5C are schematic diagrams showing the operation process of the heat-absorbing member when the battery cell ignites.

As shown in FIG. 4, a fire may occur in any one of the plurality of battery cells 110 in the battery module 100. Hereinafter, the ignited cell is defined as a target cell 210, and a cell disposed adjacent to the target cell 210 with the heat-absorbing member 140 in between is defined as an adjacent cell 310.

As shown in FIG. 5A, when a fire occurs in the target cell 210 and the target cell 210 ignites, flames are generally directed toward a vent of the cap assembly 112, and heat is transmitted in all directions of the target cell 210 (For convenience, in the drawing, heat being transferred to long side surfaces of the target cell is shown). In particular, since the long side surface of the target cell 210 is large, heat is dissipated significantly. However, since the heat-absorbing member 140 is disposed between the target cell 210 and the adjacent cell 310, heat transferred in the direction of the adjacent cell 310 is first transferred to the heat-absorbing member 140.

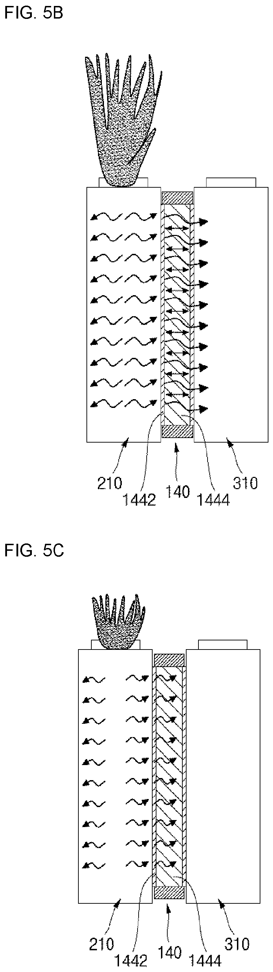

Since the heat-absorbing member 140 includes a flame-retardant sheet 142, heat and flames initially propagated to the adjacent cell 310 are blocked by the flame-retardant sheet 142. In addition, on the flame-retardant sheet 142 are provided the foaming portions 1442 and 1444 including the protective layer 1442 made of a thermoplastic resin material that becomes flexible when heat is applied thereto and the foam layer 1444 that foams when heat is applied to form a gas layer. Therefore, as shown in FIG. 5B, the heat propagated through the flame-retardant sheet 142 is absorbed and used by the protective layer 1442 and the foam layer 1444, and as the foam layer 1444 expands due to the heat, the protective layer 1442 expands together. That is, the heat transferred to the foaming portions 1442 and 1444 is absorbed (used) once by the protective layer 1442 and the foam layer 1444, and can be blocked once more by the foaming portions 1442 and 1444 with an increased volume. Therefore, compared to a conventional battery module provided only with an insulating structure, the battery module 100 according to the present embodiment has a structure in which heat from the ignited target cell 210 is difficult to transfer to the adjacent cell 310. As shown in FIG. 5C, heat transfer from the target cell 210 to the adjacent cell 310 does not occur, or heat is transferred slowly, and thus, ignition of the adjacent cell 310 may be delayed. If the battery module is equipped with a fire extinguishing device, a fire that occurs in the target cell 210 can be extinguished and the fire can be prevented from spreading to the adjacent cell 310.

While the foregoing embodiment has been provided for carrying out the present invention, it should be understood that the embodiment described herein should be considered in a descriptive sense only and not for purposes of limitation, and various changes in form and details may be made therein without departing from the spirit and scope of the invention as defined by the following claims.

## Claims

1. A battery module comprising:
a plurality of battery cells; and
a heat-absorbing member which includes a plurality of foaming portions having a foam layer that generates foaming gas at a preset ignition temperature, a protective layer surrounding the foam layer, and a plate-shaped flame-retardant sheet provided outside the foaming portions, and disposed between the plurality of cells,
wherein the battery cells and the heat-absorbing member are accommodated in the battery module.

2. The battery module as claimed in claim 1, wherein the foaming portion is bubble-shaped.

3. The battery module as claimed in claim 2, wherein the flame-retardant sheets are provided in a pair.

4. The battery module as claimed in claim 3, wherein the plurality of foaming portions are arranged in a plate shape between the flame-retardant sheets.

5. The battery module as claimed in claim 4, wherein the flame-retardant sheet is made of MICA material.

6. The battery module as claimed in claim 1, wherein the protective layer is a thermoplastic resin.

7. The battery module as claimed in claim 6, wherein the protective layer includes acrylic resin.

8. The battery module as claimed in claim 1, wherein the foam layer is butane or pentane.

9. The battery module as claimed in claim 1, wherein the battery cell has a cap assembly provided with a terminal, a lower surface that is the opposite side of the cap assembly, a long side surface connecting the lower surface, and a short side surface connecting the lower surface and the long side surface, and the heat-absorbing member is arranged to face the long side surface.
